# EUROPEAN PATENT SPECIFICATION

(11) **EP 2 581 300 B1**
(45) Date of publication and mention of the grant of the patent: **20.06.2018**
(21) Application number: 11792076.9
(22) Date of filing: 19.04.2011
(51) Int. Cl.: B62M 6/70, B62M 9/16

(54) **TENSIONER FOR ELECTRIC BICYCLE**
SPANNER FÜR EIN ELEKTROFAHRRAD
TENDEUR POUR BICYCLETTE ÉLECTRIQUE

(30) Priority: 10.06.2010 JP 2010132526
(43) Date of publication of application: 17.04.2013
(73) Proprietor: Panasonic Corporation, Kadoma-shi Osaka 571-8501 (JP)
(72) Inventor: KAWAKAMI, Masafumi, Osaka 540-6207 (JP)
(74) Representative: Grünecker Patent- und Rechtsanwälte PartG mbB
(86) International application number: PCT/JP2011/002267
(87) International publication number: WO 2011/155113

(56) References cited:
- JP-A- H1 179 059
- JP-A- H07 315 280
- JP-A- 2001 039 377
- JP-A- 2005 075 069
- JP-A- 2006 341 774
- US-A1- 2005 217 914
- US-B1- 6 591 929

## Description

### Technical Field

The present invention relates to an electric bicycle according to the preamble of claim 1. Such an electric bicycle is known for example from US 2005/0217914 A1.

From JP H07 315280 A an electric bicycle is known that is provided with a manual driving device, which has a drive transmitting system consisting of a chain and the like, and a power driving device consisting of a driving small wheel, which is brought into pressure contact with a wheel and is rotationally driven by a motor mounted in a vehicle body, a transmission unit, in which a gear ratio is set to be equal to a rotation ratio between the wheel and a driving small wheel in the power driving device, is connected to the driving small wheel, and a chain and the like in the manual driving device is suspended in the transmission unit.

### Background Art

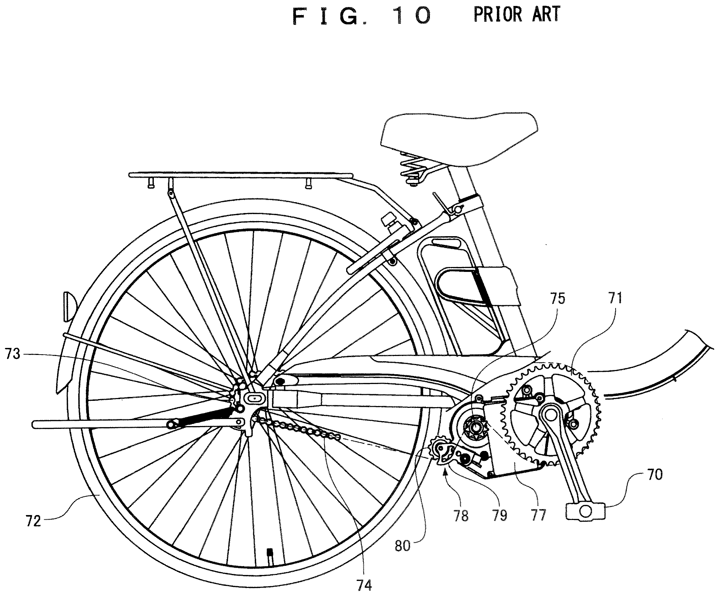

As illustrated in FIG. 10, a conventional electric bicycle includes a front sprocket 71 rotated by a human driving force (pedal force) inputted to pedals 70, a rear sprocket 73 provided on a rear wheel 72, a chain 74 wound between the front sprocket 71 and the rear sprocket 73, an auxiliary drive sprocket 75 that meshes with the chain 74, a motor (not shown) that rotatingly drives the auxiliary drive sprocket 75, a case 77 that accommodates the motor, and a tensioner 78 that applies a tension to the chain 74.

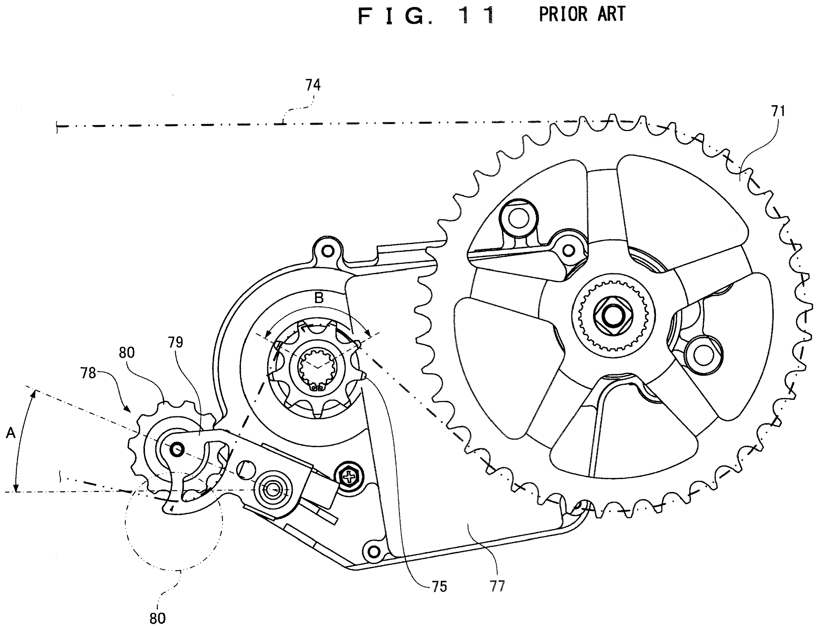

As illustrated in FIG. 11, the auxiliary drive sprocket 75 meshes with the chain 74 from below on a lower rotation path so as to lift the chain 74. The tensioner 78 has a mounting arm 79, a movable pulley 80, and a return spring (not shown). The mounting arm 79 is provided so as to swing up and down in the case 77. The movable pulley 80 is rotatably provided on the idle end of the mounting arm 79 and meshes with the lower run of the chain 74 from above. The return spring biases the mounting arm 79 downward.

With this configuration, the pedals 70 are alternately pressed to rotate the front sprocket 71, and the rotation of the front sprocket 71 is transmitted to the rear sprocket 73 through the chain 74 to rotate the rear wheel 72. At this point, the motor is driven according to a pedal force applied to the pedals 70, allowing the auxiliary drive sprocket 75 to be rotatingly driven so as to transmit an auxiliary driving force to the rear sprocket 73 from the auxiliary drive sprocket 75 through the chain 74. Thus, the auxiliary driving force is added to a human driving force to rotate the rear wheel 72.

At this point, the mounting arm 79 is biased downward by a biasing force of the return spring. This allows the movable pulley 80 to press the lower run of the chain 74 downward from above so as to apply an optimum tension to the chain 74, thereby preventing slack in the chain 74.

For example, an electric bicycle provided with such a tensioner is described in Patent Literature 1 below.

### Citation List

### Patent Literature

Patent Literature 1: Japanese Patent Laid-Open No. 2006-341774

### Summary of Invention

### Technical Problem

As illustrated in FIG. 11, in the conventional form, a body frame and the chain 74 disadvantageously vary in length due to a manufacturing error. Such variations in length may change the posture of the mounting arm 79 (in other words, an angle A of the mounting arm 79 may increase or decrease with respect to a horizontal plane), leading to large fluctuations of a winding angle B of the auxiliary drive sprocket 75. The winding angle B is the angle of the winding range of the chain 74 around the outer edge of the auxiliary drive sprocket 75.

For example, in the case where the winding angle B is smaller than a specified angle, the chain 74 meshes with a smaller number of teeth of the auxiliary drive sprocket 75, causing the auxiliary drive sprocket 75 to have tooth skip and insufficiently mesh with the chain 74. In the tooth skip, the chain 74 slides over a tooth to an adjacent tooth on the auxiliary drive sprocket 75. Such tooth skip unfortunately causes insufficient transmission of a turning force of the auxiliary drive sprocket 75 to the chain 74.

Furthermore, in the case where the angle A of the mounting arm 79 increases, such tooth skip may occur on the rear sprocket 73 because slack increases in the chain 74.

In the case where the winding angle B is larger than the specified angle, friction between the auxiliary drive sprocket 75 and the chain 74 increases, disadvantageously leading to an increase in a loss of the turning force of the auxiliary drive sprocket 75.

An object of the present invention is to provide an electric bicycle with a tensioner for an electric bicycle which can suppress variations in the winding angle of an auxiliary drive wheel body.

### Solution to Problem

In order to attain the object, a first aspect of the present invention is an electric bicycle with a tensioner for applying a tension to a driving force transmission member of an electric bicycle, the electric bicycle including: a front wheel body rotatable with a crank shaft, a rear wheel body provided on a rear wheel, an endless rotatable driving force transmission member wound between the front wheel body and the rear wheel body, a rotatable auxiliary drive wheel body that meshes with the driving force transmission member from one of the inner side and the outer side of the rotating route of the driving force transmission member, and a motor that applies a rotating driving force to the auxiliary drive wheel body,
wherein the tensioner includes: a rotatable first wheel body that meshes with the driving force transmission member from one side which is the same side as the auxiliary drive wheel body, and a rotatable second wheel body that meshes with the driving force transmission member from the other side opposite to the auxiliary drive wheel body,
the first wheel body is located behind the auxiliary drive wheel body,
the second wheel body is located between the auxiliary drive wheel body and the first wheel body,
of the first wheel body and the second wheel body, at least the first wheel body is movable in a tension increase/decrease direction in which the tension of the driving force transmission member increases or decreases,
the moving distance of the second wheel body in the tension increase/decrease direction is smaller than the moving distance of the first wheel body in the tension increase/decrease direction, and
the first wheel body is biased by a biasing member in a direction in which the tension of the driving force transmission member increases.

With this configuration, pedals are pressed to rotate the front wheel body, the rotation of the front wheel body is transmitted to the rear wheel body through the driving force transmission member to rotate the rear wheel. At this point, the motor is driven according to a pedal force applied to the pedals, allowing the auxiliary drive wheel body to be rotatingly driven so as to transmit an auxiliary driving force to the rear wheel body from the auxiliary drive wheel body through the driving force transmission member. Thus, the auxiliary driving force is added to a human driving force to rotate the rear wheel.

At this point, the first and second wheel bodies are rotated in response to the rotation of the driving force transmission member, the first wheel body is moved by the biasing force of the biasing member to press the driving force transmission member in the direction in which the tension of the driving force transmission member increases. Hence, an optimum tension can be applied to the driving force transmission member so as to prevent slack in the driving force transmission member.

Since the moving distance of the second wheel body in the tension increase/decrease direction is smaller than the moving distance of the first wheel body in the tension increase/decrease direction, a change of the winding angle of the auxiliary drive wheel body can be suppressed. This can prevent the occurrence of tooth skip and an increase in the loss of the turning force of the auxiliary drive wheel body.

The relationship between the moving distances can be paraphrased as follows: the moving distance of the first wheel body in the tension increase/decrease direction is larger than the moving distance of the second wheel body in the tension increase/decrease direction. Thus, variations in the length of the driving force transmission member and variations in the length of the body frame of an electric bicycle are sufficiently absorbed by a movement of the first wheel body in the tension increase/decrease direction.

A tensioner for an electric bicycle according to a second aspect of the present invention, wherein the moving distance of the second wheel body in the tension increase/decrease direction is 0.

With this configuration, the mounting position of the second wheel body is fixed between the auxiliary drive wheel body and the first wheel body. Thus, the winding angle of the auxiliary drive wheel body is unchanged and is kept constant. This can prevent the occurrence of tooth skip and an increase in the loss of the turning force of the auxiliary drive wheel body.

A tensioner for an electric bicycle according to a third aspect of the present invention, wherein the first wheel body is movable in a direction vertically crossing a virtual straight line connecting the second wheel body and the rear wheel body.

A tensioner for an electric bicycle according to a fourth aspect of the present invention, wherein the first wheel body is movable in a direction orthogonal to the virtual straight line.

With this configuration, variations in the length of the driving force transmission member and variations in the length of the body frame of the electric bicycle are further absorbed by moving the first wheel body.

A tensioner for an electric bicycle according to a fifth aspect of the present invention, wherein the first wheel body is attached to a mounting arm capable of swinging with respect to a lateral pivot axis, the biasing member biases the mounting arm in the direction in which the tension of the driving force transmission member increases, and the mounting arm includes mounting posture indicators that indicate the permissible range of the mounting posture of the mounting arm in the swinging direction of the mounting arm.

With this configuration, the tensioner is attached to the electric bicycle while the driving force transmission member is wound around the front wheel body, the rear wheel body, the auxiliary drive wheel boy, and the first and second wheel bodies. At this point, the mounting posture indicators indicating the permissible range of the mounting posture of the mounting arm make it possible to easily confirm whether or not the mounting posture of the mounting arm is placed within the permissible range by visual observation.

In the case where the mounting posture of the mounting arm is placed out of the permissible range, the mounting position of the rear wheel is longitudinally shifted to adjust a longitudinal distance between the front wheel body and the rear wheel body, thereby placing the mounting posture of the mounting arm within the permissible range. Thus, the mounting arm can be easily attached with a normal mounting posture.

A tensioner for an electric bicycle according to a sixth aspect of the present invention, wherein the first wheel body is attached to a mounting arm capable of swinging with respect to a lateral pivot axis, the mounting arm is provided so as to swing on a mounting member via a mounting shaft, the mounting member is attached to the outer edge of a case that accommodates the motor, the biasing member biases the mounting arm in the direction in which the tension of the driving force transmission member increases, a lateral distance between the mounting arm and the mounting member is set larger than a lateral distance between the mounting arm and the outer edge of the case, and the biasing member is provided between the mounting arm and the mounting member.

With this configuration, the mounting space of the biasing member is formed between the mounting arm and the mounting member. The lateral distance between the mounting arm and the mounting member is larger than the lateral distance between the mounting arm and the outer edge of the case, thereby widely securing the mounting space in a lateral direction. Thus, a biasing member having a large size and a large biasing force can be provided in the mounting space so as to press the first wheel body to the driving force transmission member with a larger biasing force, thereby reliably preventing slack in the driving force transmission member.

### Advantageous Effects of Invention

According to the present invention, variations in the winding angle of an auxiliary drive wheel body can be suppressed or a winding angle can be kept constant. Furthermore, variations in the length of a driving force transmission member and variations in the length of the body frame of an electric bicycle can be sufficiently absorbed.

### Brief Description of Drawings

[FIG. 1] FIG. 1 is a partially cutaway side view of an electric bicycle including a tensioner according to a first embodiment of the present invention.
[FIG. 2] FIG. 2 is a cross-sectional view of a driving unit in the electric bicycle according to the first embodiment of the present invention.
[FIG. 3] FIG. 3 is a side view of the driving unit including the tensioner according to the first embodiment of the present invention.
[FIG. 4] FIG. 4 is a cross-sectional view of the tensioner according to the first embodiment of the present invention.
[FIG. 5] FIG. 5 is a side view illustrating the tensioner, the driving unit, a rear sprocket, and a chain in a first mounting posture according to the first embodiment of the present invention.
[FIG. 6] FIG. 6 is a side view illustrating the tensioner, the driving unit, the rear sprocket, and the chain in a second mounting posture according to the first embodiment of the present invention.
[FIG. 7] FIG. 7 is a side view of the tensioner in the first mounting posture according to the first embodiment of the present invention.
[FIG. 8] FIG. 8 is a side view of the tensioner in the second mounting posture according to the first embodiment of the present invention.
[FIG. 9] FIG. 9 is a side view of a tensioner according to a second embodiment of the present invention.
[FIG. 10] FIG. 10 is a partially cutaway side view of an electric bicycle including a conventional tensioner.
[FIG. 11] FIG. 11 is a side view of a driving unit including the conventional tensioner.

### Description of Embodiments

Embodiments of the present invention will be described below with reference to the accompanying drawings.

### (First Embodiment)

A first embodiment will be first described below.

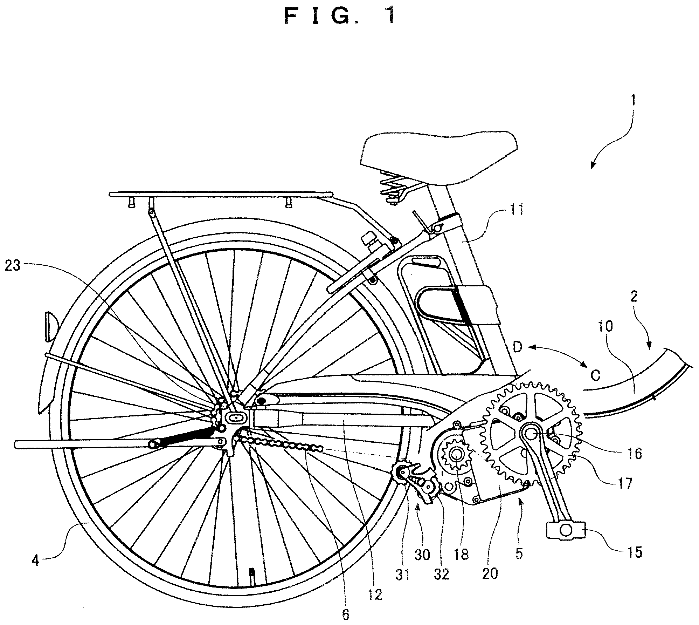

As illustrated in FIG. 1, reference numeral 1 denotes an electric bicycle including a body frame 2, a front wheel (not shown) and a rear wheel 4 that are provided on the body frame 2, a driving unit 5 that rotatingly drives the rear wheel 4, and an endless rotatable chain 6 (an example of a driving force transmission member) that transmits a rotating driving force of the driving unit 5 to the rear wheel 4.

The body frame 2 includes a main frame 10, a seat tube 11, a chain stay 12, and a hanger lug (not shown) connecting the seat tube 11, the rear end of the main frame 10, and the front end of the chain stay 12.

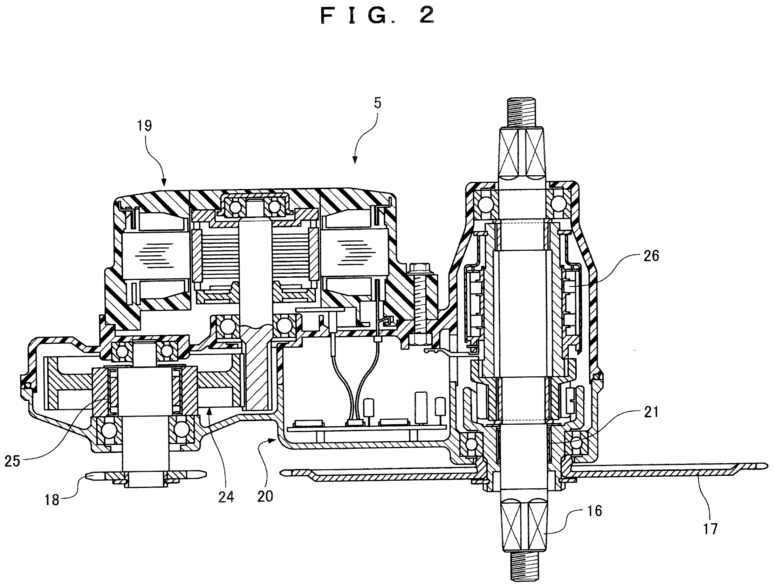

As illustrated in FIG. 2, the driving unit 5 is provided on the hanger lug and includes a crank shaft 16 that is rotated by pressing pedals 15, a front sprocket 17 (an example of a front wheel body) that is fit over the crank shaft 16, a rotatable auxiliary drive sprocket 18 (an example of an auxiliary drive wheel body), a motor 19 that rotatingly drives the auxiliary drive sprocket 18, and a case 20.

A one-way clutch 21 is provided between the crank shaft 16 and the front sprocket 17. When the crank shaft 16 rotates in one direction C, a turning force transmission path from the crank shaft 16 to the front sprocket 17 is connected via the one-way clutch 21, allowing the front sprocket 17 to rotate with the crank shaft 16. When the crank shaft 16 rotates in an opposite direction D, the turning force transmission path from the crank shaft 16 to the front sprocket 17 is interrupted by the one-way clutch 21, allowing the crank shaft 16 and the front sprocket 17 to rotate separately.

The chain 6 is wound between the front sprocket 17 and a rear sprocket 23 (an example of a rear wheel body) mounted on the center shaft of the rear wheel 4. As illustrated in FIG. 1, the auxiliary drive sprocket 18 is provided between the front sprocket 17 and the rear sprocket 23 and meshes with the chain 6 from the outside (an example of one side, in this case, from beneath the lower run of the chain 6) of the oval rotation route of the chain 6 so as to lift the lower run of the chain 6.

As illustrated in FIG. 2, a speed reduction mechanism 24 and a one-way clutch 25 are provided on a turning force transmission path from the motor 19 to the auxiliary drive sprocket 18. When the motor 19 is rotatingly driven, the turning force transmission path is connected via the one-way clutch 25 to transmit the turning force of the motor 19 to the auxiliary drive sprocket 18 through the speed reduction mechanism 24. When the motor 19 is stopped, the turning force transmission path is interrupted by the one-way clutch 25, preventing a load on the motor 19 from acting on the chain 6.

The crank shaft 16 is inserted into the case 20 and is rotatably supported therein. The motor 19 and the speed reduction mechanism 24 are stored in the case 20. The case 20 further contains a torque sensor 26 that detects a pedal force acting on the pedals 15.

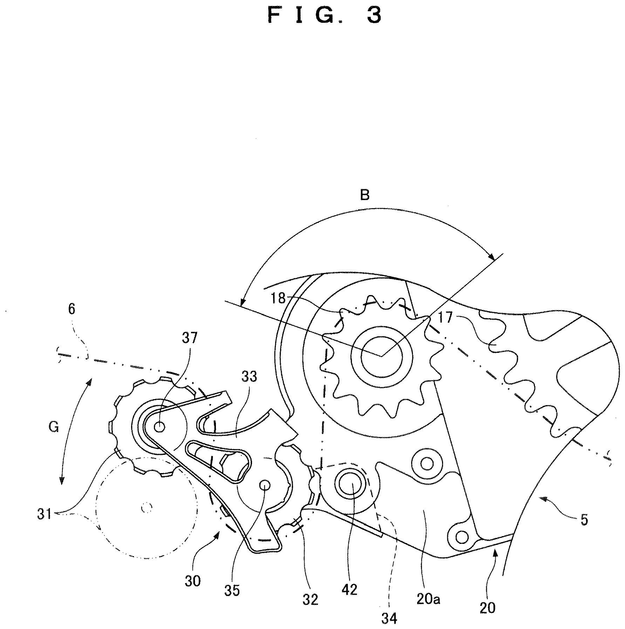

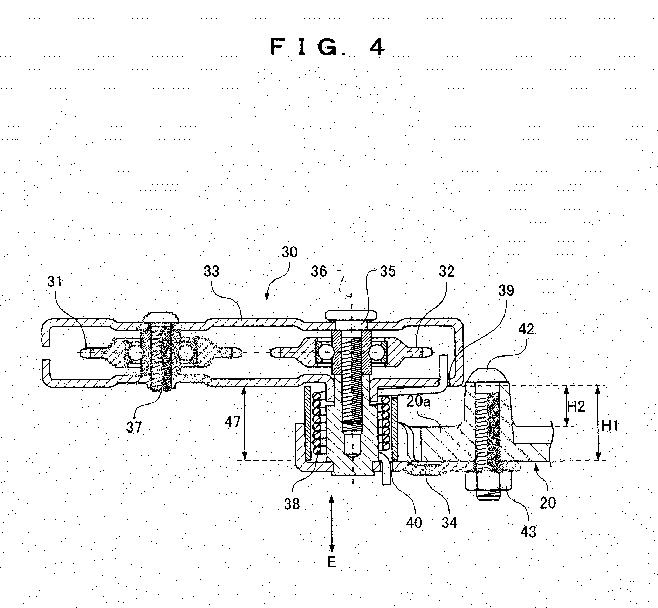

As illustrated in FIGS. 3 and 4, a tensioner 30 that applies a tension to the chain 6 is provided in the case 20. The tensioner 30 includes a first pulley 31 (an example of a first wheel body), a second pulley 32 (an example of a second wheel body), a mounting arm 33, and a mounting plate 34 (an example of a mounting member).

A mounting shaft 35 is provided on the mounting plate 34. The mounting arm 33 is provided on the mounting shaft 35 so as to swing with respect to a pivot axis 36 that passes through the mounting shaft 35 in a lateral direction E.

The first pulley 31 is rotatably attached to the idle end of the mounting arm 33 via a spindle 37 and is located behind the auxiliary drive sprocket 18. The first pulley 31 meshes with the chain 6 from the same side as the auxiliary drive sprocket 18 (in other words, from beneath the lower run of the chain 6) so as to lift the lower run of the chain 6.

The second pulley 32 is fitted over the mounting shaft 35 in a rotatable manner. The second pulley 32 is located between the auxiliary drive sprocket 18 and the first pulley 31 and meshes with the lower run of the chain 6 from a side opposite to the auxiliary drive sprocket 18 (an example of the other side, in this case, from above the lower run of the chain 6). Thus, the lower run of the chain 6 is curved like a mountain at the auxiliary drive sprocket 18 and is curved like a valley at the second pulley 32.

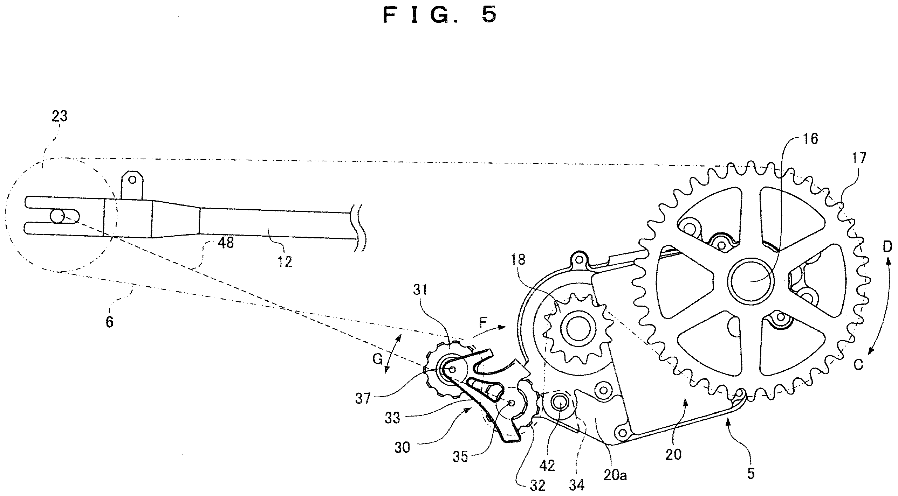

The mounting arm 33 swinging with respect to the pivot axis 36 moves the first pulley 31 in a tension increase/decrease direction G in which the tension of the chain 6 increases or decreases. The mounting position of the second pulley 32 is fixed on the proximal end of the mounting arm 33, so that the moving distance of the second pulley 32 in the tension increase/decrease direction G is set at 0. As illustrated in FIG. 5, the tension increase/decrease direction G vertically crosses a virtual straight line 48 connecting the center of the second pulley 32 and the center of the rear sprocket 23. The pivot axis 36 of the mounting arm 33 is located at the same position as the center of the second pulley 32.

As illustrated in FIG. 4, a torsion coil spring 38 (an example of a biasing member) is fitted over the mounting shaft 35 and is held between the mounting plate 34 and the proximal end of the mounting arm 33. The mounting arm 33 is biased by the torsion coil spring 38 so as to swing upward (an example of a direction in which the tension of the chain 6 increases). Thus, the first pulley 31 is biased upward by a biasing force of the torsion coil spring 38. One end of the torsion coil spring 38 is inserted into a hole 39 formed on the mounting arm 33 while the other end of the torsion coil spring 38 is inserted into a hole 40 formed on the mounting plate 34.

The case 20 has a plate-like outer edge portion 20a. The mounting plate 34 in contact with the back side of the outer edge portion 20a of the case 20 is attached to the outer edge portion 20a with a screw 42 (connecting member) and a nut 43 (connecting member). A lateral distance H1 between the proximal end of the mounting arm 33 and the mounting plate 34 is set larger than a lateral distance H2 between the proximal end of the mounting arm 33 and the outer edge portion 20a of the case 20.

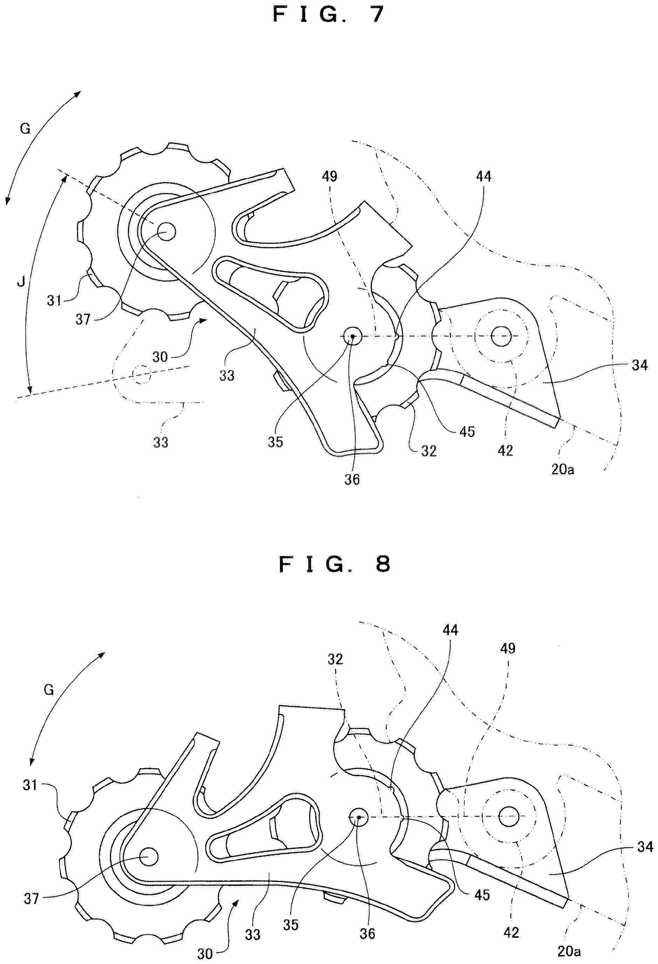

As illustrated in FIGS. 7 and 8, first and second mounting posture indicating protrusions 44 and 45 (an example of a mounting posture indicator) are provided on the proximal end of the mounting arm 33. The first and second mounting posture indicating protrusions 44 and 45 indicate the permissible range of the mounting posture of the mounting arm 33 in the swinging direction of the mounting arm 33 (in other words, in the tension increase/decrease direction G).

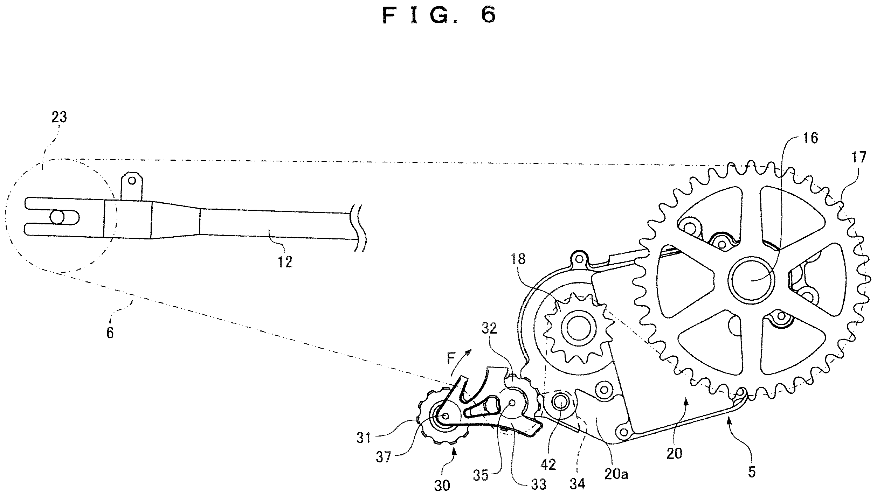

As illustrated in FIG. 7, the mounting arm 33 is in a first mounting posture when a virtual straight line 49 connecting the rotation center (pivot axis 36) of the second pulley 32 and the head of the screw 42 is located on the first mounting posture indicating protrusion 44. As illustrated in FIG. 8, the mounting arm 33 is in a second mounting posture when the straight line 49 is located on the second mounting posture indicating protrusion 45. As illustrated in FIGS. 5 and 7, in the case of the first mounting posture of the mounting arm 33, the torsion coil spring 38 produces low torque, allowing the first pulley 31 to press the chain 6 with a load F at a lower limit value. As illustrated in FIGS. 6 and 8, in the case of the second mounting posture of the mounting arm 33, the torsion coil spring 38 produces high torque, allowing the first pulley 31 to press the chain 6 with the load F at an upper limit value. A range between the first mounting posture and the second mounting posture is set as a permissible range J. The mounting arm 33 is attached within the permissible range J.

The effect of the configuration will be described below.

As illustrated in FIG. 1, the pedals 15 are pressed to rotate the front sprocket 17. The rotation of the front sprocket 17 is transmitted to the rear sprocket 23 through the chain 6 to rotate the rear wheel 4. At this point, a pedal force applied to the pedals 15 is detected by the torque sensor 26, the motor 19 is driven according to a detected value, the auxiliary drive sprocket 18 is rotatingly driven, and an auxiliary driving force is transmitted to the rear sprocket 23 from the auxiliary drive sprocket 18 through the chain 6. Thus, the auxiliary driving force is added to a human driving force to rotate the rear wheel 4.

At this point, the first and second pulleys 31 and 32 are rotated in response to the rotation of the chain 6, the mounting arm 33 is swung upward by the biasing force of the torsion coil spring 38, and the first pulley 31 presses the chain 6 upward from beneath the chain 6. Hence, an optimum tension can be applied to the chain 6 so as to prevent slack in the chain 6.

As illustrated in FIG. 3, the mounting position of the second pulley 32 is fixed between the auxiliary drive sprocket 18 and the first pulley 31. Thus, the winding angle B of the auxiliary drive sprocket 18 is unchanged and is kept constant. This can prevent the occurrence of tooth skip and an increase in the loss of the turning force of the auxiliary drive sprocket 18.

Moreover, the mounting arm 33 swings to move the first pulley 31 in the tension increase/decrease direction G (vertical direction), thereby absorbing variations in the length of the chain 6 and the length of the body frame 2. At this point, as illustrated in FIG. 5, the moving direction of the first pulley 31, that is, the tension increase/decrease direction G is perpendicular to the virtual straight line 48, thereby reducing the moving distance of the first pulley 31 in the absorption of variations in the length of the chain 6 and the length of the body frame 2.

As illustrated in FIG. 4, a mounting space 47 for the torsion coil spring 38 is formed between the proximal end of the mounting arm 33 and the mounting plate 34. At this point, the lateral distance H1 is larger than the lateral distance H2, thereby widely securing the mounting space 47 in the lateral direction E. Thus, the torsion coil spring 38 having a large size and a large biasing force can be provided so as to press the first pulley 31 to the chain 6 with a larger biasing force, thereby reliably preventing slack in the chain 6.

The tensioner 30 is attached to the outer edge portion 20a of the case 20 with the screw 42 while the chain 6 is wound around the front sprocket 17, the rear sprocket 23, the auxiliary drive sprocket 18, and the first and second pulleys 31 and 32. At this point, when the mounting posture of the mounting arm 33 is located within the permissible range J, the virtual straight line 49 connecting the rotation center of the second pulley 32 and the head of the screw 42 is placed between the first mounting posture indicating protrusion 44 and the second mounting posture indicating protrusion 45. When the mounting posture of the mounting arm 33 is deviated from the permissible range J, the straight line 49 is not placed between the first mounting posture indicating protrusion 44 and the second mounting posture indicating protrusion 45. Hence, a visual check on the straight line 49 and the first and second mounting posture indicating protrusions 44 and 45 makes it possible to easily confirm whether or not the mounting posture of the mounting arm 33 is placed within the permissible range by visual observation.

In the case where the mounting posture of the mounting arm 33 is placed out of the permissible range, the mounting position of the rear wheel 4 is longitudinally shifted to adjust a longitudinal distance between the front sprocket 17 and the rear sprocket 23, thereby placing the mounting posture of the mounting arm 33 within the permissible range. Thus, the mounting arm 33 can be easily attached with a normal mounting posture.

In the first embodiment, the second pulley 32 is provided in the mounting arm 33. The second pulley 32 may be provided in a different member from the mounting arm 33 (e.g., the mounting plate 34). The pivot axis 36 of the mounting arm 33 may be set on the virtual straight line 48 connecting the center of the second pulley 32 and the center of the rear sprocket 23.

In the first embodiment, the pivot axis 36 of the mounting arm 33 and the center of the second pulley 32 are set at the same position. The pivot axis 36 and the center of the second pulley 32 may be set at different positions as will be described in a second embodiment.

### (Second Embodiment)

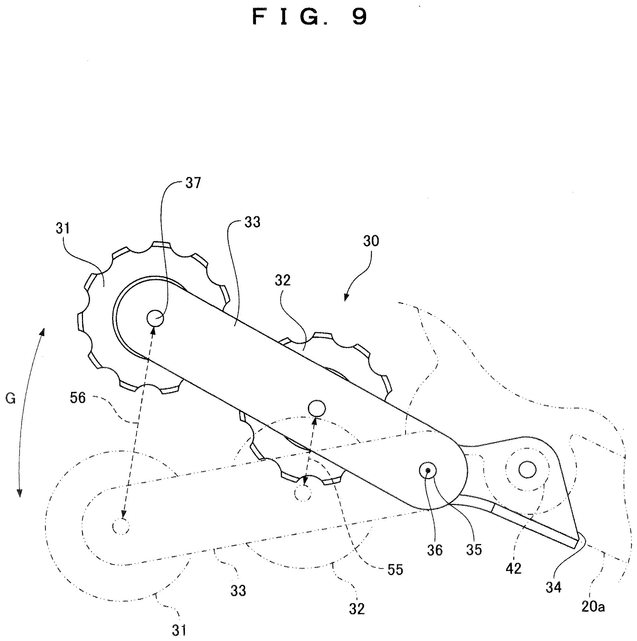

In a second embodiment, as illustrated in FIG. 9, a second pulley 32 is provided in a mounting arm 33 and has its center located between a pivot axis 36 of the mounting arm 33 and the center of a first pulley 31. Thus, the mounting arm 33 swings to move the first pulley 31 and the second pulley 32 in a tension increase/decrease direction G. At this point, a moving distance 55 of the second pulley 32 in the tension increase/decrease direction G is smaller than a moving distance 56 of the first pulley 31 in the tension increase/decrease direction G.

The effect of the configuration will be described below.

Since the moving distance 55 of the second pulley 32 is smaller than the moving distance 56 of the first pulley 31, a change of a winding angle B of an auxiliary drive sprocket 18 can be suppressed. This can prevent the occurrence of tooth skip and an increase in the loss of the turning force of the auxiliary drive sprocket 18.

The relationship between the moving distances can be paraphrased as follows: the moving distance 56 of the first pulley 31 in the tension increase/decrease direction G is larger than the moving distance 55 of the second pulley 32 in the tension increase/decrease direction. Thus, variations in the length of a chain 6 and variations in the length of a body frame 2 can be sufficiently absorbed by a movement of the first pulley 31.

In the second embodiment, the center of the second pulley 32 is located on a virtual straight line connecting the pivot axis 36 of the mounting arm 33 and a center 37 of the first pulley 31. The center of the second pulley 32 may deviate from the straight line.

In these embodiments, the chain 6 is used as an example of a driving force transmission member. The chain 6 may be replaced with a belt.

In these embodiments, the torsion coil spring 38 is used as a biasing member. Other kinds of springs may be used instead.

## Claims

1. An electric bicycle (1) with a tensioner (30) for applying a tension to a driving force transmission member (6) of the electric bicycle (1),
the electric bicycle (1) comprising: a front wheel body (17) rotatable with a crank shaft (16), a rear wheel body (23) provided on a rear wheel (4), an endless rotatable driving force transmission member (6) wound between the front wheel body (17) and the rear wheel body (23), and a motor (19) that provides a rotating driving force,
wherein the tensioner (30) is attached to the electric bicycle (1) and comprises: a rotatable first wheel body (31) and a rotatable second wheel body (32) that mesh with the driving force transmission member (6) from opposite sides,
the first wheel body (31) being attached to a mounting arm (33) capable of swinging with respect to a lateral pivot axis, and both biased by a biasing member (38) in a direction in which the tension of the driving force transmission member (6) increases,
**characterized by,**
a rotatable auxiliary drive wheel body (18), to which the rotating driving force of the motor (6) is applied,
wherein the auxiliary drive wheel body (18) meshes with the driving force transmission member (6) from an outer side of a rotating route of the driving force transmission member (6),
wherein the auxiliary drive wheel body (18) meshes with the driving force transmission member (6) from the same side as the rotatable first wheel body (31),
wherein the first wheel body (31) is located behind the auxiliary drive wheel body (18),
wherein the second wheel body (32) is fixed between the auxiliary drive wheel body (18) and the first wheel body (31),
wherein the first wheel body (31) is movable in a direction vertically crossing a virtual straight line (48) connecting the second wheel body (32) and the rear wheel body (23), and
wherein a moving distance of the second wheel body (32) in the direction vertically crossing a virtual straight line (48) connecting the second wheel body (32) and the rear wheel body (23) is smaller than a moving distance of the first wheel body (31) in the direction vertically crossing a virtual straight line (48) connecting the second wheel body (32) and the rear wheel body (23), and
the mounting arm (33) includes mounting posture indicators (44, 45) that indicate a permissible range of a mounting posture of the mounting arm (33) in a swinging direction of the mounting arm (33).

2. An electric bicycle (1) according to claim 1, wherein the first wheel body (31) is movable in a direction orthogonal to the virtual straight line (48).

3. An electric bicycle (1) according to claim 1, wherein
the mounting arm (33) is provided so as to swing on a mounting member (34) via a mounting shaft (35),
the mounting member (34) is attached to an outer edge (20a) of a case (20) that accommodates the motor (19),
a lateral distance (H1) between the mounting arm (33) and the mounting member (34) is set larger than a lateral distance (H2) between the mounting arm (33) and the outer edge (20a) of the case (20), and
the biasing member (38) is provided between the mounting arm (33) and the mounting member (34).

## Patentansprüche

1. Elektrofahrrad (1) mit einem Spanner (30) zum Aufbringen einer Spannung auf ein Antriebskraftübertragungselement (6) des Elektrofahrrads (1),
wobei das Elektrofahrrad (1) umfasst: einen Vorderradkörper (17), der mit einer Kurbelwelle (16) rotierbar ist, einen Hinterradkörper (23), der an einem Hinterrad (4) vorgesehen ist, ein endloses rotierbares Antriebskraftübertragungselement (6), das zwischen dem Vorderradkörper (17) und dem Hinterradkörper (23) aufgewickelt ist, und einen Motor (19), der eine rotierende Antriebskraft bewirkt,
wobei der Spanner (30) an dem Elektrofahrrad (1) befestigt ist und enthält: einen rotierbaren ersten Radkörper (31) und einen rotierbaren zweiten Radkörper (32), die mit dem Antriebskraftübertragungselement (6) von entgegengesetzten Seiten kämmen,
wobei der erste Radkörper (31) an einem Halterungsarm (33) befestigt ist, der bezüglich einer seitlichen Drehachse schwingfähig ist, und beide durch ein Vorspannelement (38) in einer Richtung, in der die Spannung des Antriebskraftübertragungselements (6) zunimmt, vorgespannt sind,
**gekennzeichnet durch**
einen rotierbaren Hilfsantriebsradkörper (18), auf den die rotierende Antriebskraft des Motors (6) aufgebracht wird,
wobei der Hilfsantriebsradkörper (18) mit dem Antriebskraftübertragungselement (6) von einer äußeren Seite einer rotierenden Strecke des Antriebskraftübertragungselements (6) kämmt,
wobei der Hilfsantriebsradkörper (18) mit dem Antriebskraftübertragungselement (6) von der gleichen Seite wie der rotierbare erste Radkörper (31) kämmt,
wobei der erste Radkörper (31) sich hinter dem Hilfsantriebsradkörper (18) befindet,
wobei der zweite Radkörper (32) zwischen dem Hilfsantriebsradkörper (18) und dem ersten Radkörper (31) befestigt ist,
wobei der erste Radkörper (31) in einer Richtung bewegbar ist, die eine den zweiten Radkörper (32) und den hinteren Radkörper (23) verbindende, virtuelle gerade Linie (48) vertikal kreuzt, und
wobei ein Bewegungsabstand des zweiten Radkörpers (32) in der Richtung, die eine den zweiten Radkörper (32) und den hinteren Radkörper (23) verbindende, virtuelle gerade Linie (48) vertikal kreuzt, kleiner ist als ein Bewegungsabstand des ersten Radkörpers (31) in der Richtung, die eine den zweiten Radkörper (32) und den hinteren Radkörper (23) verbindende, virtuelle gerade Linie (48) vertikal kreuzt, und der Halterungsarm (33) Einbauhaltungsanzeigen (44, 45) enthält, die einen zulässigen Bereich einer Einbauhaltung des Halterungsarms (33) in einer Schwingungsrichtung des Halterungsarms (33) angeben.

2. Elektrofahrrad (1) nach Anspruch 1, wobei der erste Radkörper (31) in einer Richtung rechtwinklig zu der virtuellen geraden Linie (48) bewegbar ist.

3. Elektrofahrrad (1) nach Anspruch 1, wobei
der Halterungsarm (33) so vorgesehen ist, dass er auf einem Befestigungselement (34) durch eine Einbauwelle (35) schwingt,
das Befestigungselement (34) an einer äußeren Kante (20a) eines Gehäuses (20), das den Motor (19) aufnimmt, befestigt ist,
ein seitlicher Abstand (H1) zwischen dem Halterungsarm (33) und dem Befestigungselement (34) größer eingestellt ist als ein seitlicher Abstand (H2) zwischen dem Halterungsarm (33) und der äußeren Kante (20a) des Gehäuses (20), und
das Vorspannelement (38) zwischen dem Halterungsarm (33) und dem Befestigungselement (34) vorgesehen ist.

## Revendications

1. Bicyclette électrique (1) avec un tendeur (30) pour appliquer une tension à un élément de transmission de force d'entraînement (6) de la bicyclette électrique (1),
la bicyclette électrique (1) comprenant : un corps de roue avant (17) pouvant tourner avec un vilebrequin (16), un corps de roue arrière (23) prévu sur une roue arrière (4), un élément de transmission de force d'entraînement rotatif sans fin (6) enroulé entre le corps de roue avant (17) et le corps de roue arrière (23), et un moteur (19) qui fournit une force d'entraînement en rotation,
dans laquelle le tendeur (30) est fixé à la bicyclette électrique (1) et comprend : un premier corps de roue rotatif (31) et un second corps de roue rotatif (32) qui engrènent avec l'élément de transmission de force d'entraînement (6) à partir de côtés opposés, le premier corps de roue (31) étant fixé à un bras de montage (33) capable de pivoter par rapport à un axe de pivotement latéral, et tous deux étant sollicités par un élément de sollicitation (38) dans une direction dans laquelle la tension de l'élément de transmission de force d'entraînement (6) augmente,
**caractérisée par**,
un corps de roue d'entraînement auxiliaire rotatif (18), auquel la force d'entraînement en rotation du moteur (6) est appliquée,
dans laquelle le corps de roue d'entraînement auxiliaire (18) engrène avec l'élément de transmission de force d'entraînement (6) à partir d'un côté extérieur d'un trajet de rotation de l'élément de transmission de force d'entraînement (6),
dans laquelle le corps de roue d'entraînement auxiliaire (18) engrène avec l'élément de transmission de force d'entraînement (6) à partir du même côté que le premier corps de roue rotatif (31),
dans laquelle le premier corps de roue (31) est situé derrière le corps de roue d'entraînement auxiliaire (18),
dans laquelle le second corps de roue (32) est fixé entre le corps de roue d'entraînement auxiliaire (18) et le premier corps de roue (31),
dans laquelle le premier corps de roue (31) est mobile dans une direction croisant verticalement une ligne droite virtuelle (48) reliant le second corps de roue (32) et le corps de roue arrière (23), et
dans laquelle une distance de déplacement du second corps de roue (32) dans la direction croisant verticalement une ligne droite virtuelle (48) reliant le second corps de roue (32) et le corps de roue arrière (23) est inférieure à une distance de déplacement du premier corps de roue (31) dans la direction croisant verticalement une ligne droite virtuelle (48) reliant le second corps de roue (32) et le corps de roue arrière (23), et
le bras de montage (33) comprend des indicateurs de position de montage (44, 45) qui indiquent une plage admissible d'une position de montage du bras de montage (33) dans une direction de pivotement du bras de montage (33).

2. Bicyclette électrique (1) selon la revendication 1, dans laquelle le premier corps de roue (31) est mobile dans une direction orthogonale à la ligne droite virtuelle (48).

3. Bicyclette électrique (1) selon la revendication 1, dans laquelle
le bras de montage (33) est prévu pour pivoter sur un élément de montage (34) via un arbre de montage (35),
l'élément de montage (34) est fixé à un bord externe (20a) d'un carter (20) qui loge le moteur (19),
une distance latérale (H1) entre le bras de montage (33) et l'élément de montage (34) est plus grande qu'une distance latérale (H2) entre le bras de montage (33) et le bord extérieur (20a) du carter (20), et
l'élément de sollicitation (38) est prévu entre le bras de montage (33) et l'élément de montage (34).
